# EUROPEAN PATENT APPLICATION

(11) **EP 4 628 250 A1**
(43) Date of publication of application: **08.10.2025**
(21) Application number: 22967178.9
(22) Date of filing: 30.11.2022
(51) Int. Cl.: B23Q 11/08, E05F 15/643, E05F 15/646

(54) **DOOR DRIVE DEVICE AND MACHINE TOOL EQUIPPED WITH DOOR DRIVE DEVICE**

(71) Applicant: DMG Mori Co., Ltd., Yamatokoriyama-shi, Nara 639-1160 (JP)
(72) Inventor: YAMAMOTO, Kosuke, Yamatokoriyama-shi, Nara 639-1160 (JP); NORO, Yuta, Yamatokoriyama-shi, Nara 639-1160 (JP)
(74) Representative: Isarpatent
(86) International application number: PCT/JP2022/044233
(87) International publication number: WO 2024/116345

(57) **Abstract**

A door drive device (100) includes a pair of pulleys (111, 112), an endless belt (113) that is rotatably looped around the pair of pulleys (111, 112), and a single drive source (114) that rotates the endless belt (113). The endless belt (113) is arranged in a position spaced apart to a door-rear side relative to the first door (21) and the second door (22) in the closed state. The door drive device (100) includes a first connecting member that connects the first door (21) and one flat belt portion (113a) of the endless belt (113), and a second connecting member that connects the second door (22) and the other flat belt portion (113b).

## Description

### [TECHNICAL FIELD]

The present invention relates to a door drive device configured to drive opening/closing doors including a first door and a second door arranged in a predetermined direction in a closed state, and a machine tool including the door drive device.

### [BACKGROUND ART]

A known example of a door drive device of this type is a door drive device disclosed in Japanese Patent Application Laid-Open No. 2010-194707 (hereinafter, Patent Document 1). The door drive device is used to drive the opening/closing doors provided in the machine tool. The opening/closing doors are provided in an opening of the machine cover that covers the machining chamber of the machine tool. The opening/closing doors are composed of a left side door and a right side door lined up in the left-right direction in the closed state. The door drive device includes a left side drive cylinder connected to the left side door and a right side drive cylinder connected to the right side door. The left side door and the right side door are configured to be driven in opposite directions by the respective connected drive cylinders, thereby opening/closing the opening.

In this door drive device, a drive cylinder (drive source) is provided for each of the left side door and the right side door (the first door and the second door), which results in an increase in the number of components and an increase in cost.

To address this problem, it is conceivable to use a door drive device capable of opening and closing left and right doors by a single actuator, for example, as disclose d in Japanese Patent Application Laid-Open No. 2019-139659 (hereinafter, Patent Document 2). This door drive device includes a pair of pulleys spaced apart from each other in a horizontal direction, an endless belt looped around the pair of pulleys, and a single motor that rotationally drives the endless belt. The endless belt is provided directly above the opening that is opened and closed by the left and right door units. The endless belt has a pair of flat belt portions that face each other and a pair of curved portions that engage each pulley. The left side door is connected to one of the flat belt portions, and the right side door is connected to the other of the flat belt portions.

With this door drive device, when the endless belt is rotationally driven in the forward direction by the motor, the left side door and the right side door approach each other and perform a door-closing operation. On the other hand, when the endless belt is rotationally driven in the reverse direction by the motor, the left side door and the right side door move apart from each other in the left-right direction and perform a door-opening operation.

### [PRIOR ART DOCUMENTS]

### [PATENT DOCUMENTS]

[Patent Document 1] Japanese Patent Application Laid-Open No. 2010-194707
[Patent Document 2] Japanese Patent Application Laid-Open No. 2019-139659

### [SUMMARY OF THE INVENTION]

### [PROBLEM TO BE SOLVED]

However, in the door drive device of Patent Document 2, since the endless belt is provided directly above the opening, for example, a large workpiece or the like may interfere with the endless belt when being loaded from outside into the machine tool, which may limit the size of the loadable workpiece or make it difficult to load the workpiece into the machine tool using an in-plant crane or the like.

The present invention has been made in view of the above circumstances, and an object thereof is to perform an opening/closing operation of a first door and a second door by a single drive source using an endless belt, while improving convenience in, for example, a workpiece loading operation.

### [SOLUTION TO PROBLEM]

In one aspect of the present invention to solve the problem,
a door drive device configured to drive opening and closing of opening/closing doors comprising a first door and a second door aligned in a predetermined direction in a closed state, includes:
a pair of pulleys arranged to be spaced from each other in the predetermined direction;
an endless belt rotatably looped about the pair of pulleys; and
a drive source configured to rotate the endless belt,
wherein:
   the endless belt comprises a pair of flat belt portions that face each other and a pair of curved portions that engage with the pulleys and connect the pair of flat belt portions;
   the first door is connected to one of the flat belt portions of the endless belt;
   the second door is connected to the other of the flat belt portions of the endless belt;
   the first door and the second door are configured to perform a door-closing operation of moving toward each other in the predetermined direction when the endless belt is rotationally driven in a predetermined forward direction by the drive source, and a door-opening operation of moving away from each other in the predetermined direction when the endless belt is rotationally driven in the direction opposite to the forward direction by the drive source;
   the endless belt is arranged in a position spaced apart to a door-rear side of the first door and the second door in the closed state;
   the door drive device further comprises a first connecting member that connects the first door and one of the flat belt portions of the endless belt; and
   a second connecting member that connects the second door and the other of the flat belt portions of the endless belt.

According to the door drive device, by utilizing the movement of the pair of flat belt portions of the endless belt that move in opposite directions when the belt rotates, opening and closing of the opening/closing doors can be driven by a single drive source. That is, when the endless belt is driven to rotate by a single drive source, the pair of flat belt portions move in opposite directions in the predetermined direction, which is the direction in which the pair of pulleys are spaced apart. The first door is connected to one of the flat belt portions, and the second door is connected to the other of the flat belt portions. Therefore, the first door and the second door move in the opposite directions with rotation of the endless belt. When the endless belt is rotated in the forward direction, the first door and the second door move toward each other in the predetermined direction, thereby achieving the door-closing operation. When the endless belt is rotated in the reverse direction, the first door and the second door move apart from each other, thereby achieving the door-opening operation. By using a single common drive source to drive two doors (the first door and the second door) constituting the opening/closing doors, the number of components can be reduced and the product cost can be lowered.

Further, with the door drive device, the endless belt is arranged in a position spaced apart to the door-rear side than the first door and the second door. Therefore, in a state where the first door and the second door are opened, for example, a large workpiece does not interfere with the door drive device when being loaded into the machining chamber, because neither the endless belt nor a beam member that stores the endless belt exists at the position where the first door and the second door are located in the closed state. Further, a workpiece suspended by a crane can be easily loaded into the machining chamber, because wires and the like do not interfere with the endless belt.

It is preferable that: the opening is formed in a side wall of a machine tool so that its upper end side is open; the predetermined direction is a horizontal direction along the side wall; a predetermined functional space facing the opening is provided on the door-rear side of the opening/closing doors; a ceiling wall of the machine tool has an upper opening that opens the predetermined functional space upward and is continuous with the upper end of the opening; the endless belt is positioned further to the door-rear side than the upper opening and above the predetermined functional space; the first connecting member is positioned above the predetermined functional space and is configured to connect the first door and one of the flat belt portions of the endless belt; and the second connecting member is positioned above the predetermined functional space and is configured to connect the second door and the other of the flat belt portions of the endless belt.

According to this, a working entity is able to access the predetermined functional space in the machine tool through the opening, when the first door and the second door are opened. The upper end of the opening is continuous with the upper opening formed in the ceiling wall of the machine tool, and the endless belt is positioned on the door-rear side (rear side) of this upper opening. Therefore, even in cases where the working entity is, for example, a crane suspended from the ceiling or a tall robot, the working entity can access the predetermined functional space through the space opened by the upper opening, without interfering with the endless belt.

The predetermined functional space is preferably a machining chamber of the machine tool. Further, the predetermined functional space is preferably a space within a setup station adjacent to the machining chamber of the machine tool.

The working entity often enters deep into the machining chamber or the space within the setup station of the machine tool to attach or detach a workpiece or exchange pallets. Therefore, it is likely that the working entity interferes with the endless belt. The present invention is particularly useful for such configurations. **In** the present invention, the endless belt is arranged further to the door-rear side than the first door and the second door, thereby avoiding interference between the working entity and the endless belt.

It is preferable that: each of the first door and the second door has a boundary side edge portion located on the boundary side in the closed state, and a non-boundary side edge portion located on a side opposite to the boundary side; at least one of the first door and the second door is a pivotally movable door such that, in the door-opening operation, the boundary side edge portion moves linearly toward the outer side in the predetermined direction while the entire door pivots about a predetermined axis parallel to the boundary side edge portion, causing the non-boundary side edge portion to move toward the door-rear side and toward the outer side in the predetermined direction; and, in the door-closing operation, performs a reverse movement to that of the door-opening operation; and the door drive device further comprises a guide mechanism configured to restrict a movement path of the pivotally movable door in the door-opening and door-closing operations.

According to this, at least one of the first door and the second door operates as a pivotally movable door. Therefore, the installation width of the first door and the second door in the predetermined direction in the door-open state can be reduced compared to a case where both the first door and the second door are configured as a linearly movable door that move straight along the predetermined direction.

The connecting member, out of the first connecting member and the second connecting member, which is connected to the pivotally movable door, is preferably connected to an end portion on the boundary side of the pivotally movable door via a connecting shaft that constitutes the predetermined axis.

According to this, the pivotally movable door pivots about the connecting shaft as a fulcrum during its opening and closing operations. Therefore, the pivotally movable door and the endless belt can be connected via the connecting member without the pivoting movement operation of the pivotally movable door being inhibited by the connecting member.

It is preferable that the door drive device includes a guide bar arranged adjacent to the endless belt and extending in the predetermined direction; and a slide bush that engages with the guide bar in a slidable manner in the extending direction, wherein the connecting member connected to the pivotally movable door is formed as a triangular frame including a base side part extending in the predetermined direction, an orthogonal side part extending from one end portion of the base side part in a direction orthogonal to the base side part, and an inclined side part connecting the distal end portion of the orthogonal side part and another end portion of the base side part, the base side part is fixed to the slide bush, and the distal end portion of the orthogonal side part is connected to the pivotally movable door via the connecting shaft.

Thus, by forming the connecting frame as a triangular frame, a sufficient space for pivoting the pivotally movable door can be ensured between the inclined side part and the pivotally movable door. Further, since the base side part of the connecting frame is supported by the guide bar via the slide bush, rattling of the connecting frame during the movement is suppressed, which enables smooth opening/closing operation of the pivotally movable door.

It is preferable that: the predetermined direction is a left-right direction as viewed from a door-front side; the boundary side edge portion extends in the up-down direction; the guide mechanism has a lower-end guide unit that guides the lower end portion of the pivotally movable door along a predetermined movement path; and the lower-end guide unit has a wheel attached to the lower end portion of the pivotally movable door, rotatable about a horizontal axle and pivotable about a vertical axis extending in the up-down direction, and a rail bar that engages with the wheel from below to restrict the movement pathway of the wheel.

According to this, the lower end portion of the pivotally movable door is guided along a predetermined movement path by the lower-end guide unit. In this way, the pivotally movable door performs the opening/closing operation while pivoting about an axis extending in the up-down direction parallel to the boundary side edge of the door. The movement path during the opening/closing operation of the pivotally movable door is restricted by the engagement between the wheel attached to the lower end portion thereof and the rail bar. This wheel is attached to the pivotally movable door, pivotably about a vertical axis extending in the up-down direction. Therefore, it is possible to avoid the pivoting movement operation of the pivotally movable door from being inhibited by the wheel.

The guide mechanism preferably has an upper-end guide unit that guides the upper end portion of the pivotally movable door along a predetermined movement path; and the upper-end guide unit is preferably configured to guide the upper end portion of the pivotally movable door by engagement between a guide groove or guide hole and a protrusion pin.

According to this, the upper end portion of the pivotally movable door is guided along a predetermined movement path by the upper-end guide unit. Therefore, it is possible to stabilize the movement path of the pivotally movable door compared to a case of using only the lower-end guide unit to guide the pivotally movable door. Further, a guiding function can be achieved with a simple configuration of engagement between the guide hole or guide groove and the protrusion pin.

The first door and the second door may each be a linearly movable door that moves linearly in the predetermined direction when performing a door opening/closing operation; and the door drive device further may include a guide mechanism configured to restrict a movement path of the linearly movable door in the opening/closing operation.

According to this, the first door and the second door are guided by the guide mechanism to move linearly in the predetermined direction during the door opening/closing operation. By configuring the first door and the second door as linearly movable doors as described, it is possible to simplify the connecting structure between the endless belt and each door.

In a machine tool including the above described door drive device, opening/closing doors driven by the door drive device, an outside wall having an opening that is opened and closed by the opening/closing doors,
the opening is formed in a side wall of a machine tool so that its upper end side is open,
the predetermined direction is a horizontal direction along the side wall;
a predetermined functional space facing the opening is provided on the door-rear side of the opening/closing doors;
a ceiling wall of the machine tool has an upper opening that opens the predetermined functional space upward and is continuous with the upper end of the opening;
the endless belt is positioned further to the door-rear side than the upper opening and above the predetermined functional space;
the first connecting member is positioned above the predetermined functional space and is configured to connect the first door and one of the flat belt portions of the endless belt; and
the second connecting member is positioned above the predetermined functional space and is configured to connect the second door and the other of the flat belt portions of the endless belt.

According to this machine tool, when the first door and the second door are opened, the working entity can access the predetermined functional space through the space opened by the upper opening, without interfering with the endless belt. This configuration is particularly useful when the working entity is, for example, a crane suspended from the ceiling or a tall robot.

The machine tool preferably includes a machining chamber in which a workpiece is machined, and the predetermined functional space is the machining chamber. Further, the machine tool preferably includes a machining chamber in which a workpiece is machined; and a setup station for workpieces, which is provided adjacent to the machining chamber, the predetermined functional space is a space inside the setup station.

### [ADVANTAGEOUS EFFECT OF THE INVENTION]

According to the present invention, the endless belt is arranged in a position spaced apart to a door-rear side relative to the first door and the second door in the closed state. The first connecting member connects the first door and one of the flat belt portions of the endless belt, while the second connecting member connects the second door and the other of the flat belt portions of the endless belt. This enables the door opening/closing operation with a single drive source using an endless belt, while avoiding interference between the working entity and the endless belt when accessing the working object through the opening.

### [BRIEF DESCRIPTION OF THE DRAWINGS]

[FIG. 1] FIG. 1 is an exterior perspective view of a machine tool having a door drive device related to an embodiment, showing opening/closing doors closed.
[FIG. 2] FIG. 2 is an exterior perspective view of the machine tool having the door drive device related to the embodiment, showing the opening/closing doors opened.
[FIG. 3] FIG. 3 is a perspective view of the machine tool with a splash guard removed seen from the front and obliquely below, showing the opening/closing doors closed.
[FIG. 4] FIG. 4 is a perspective view of the machine tool with the splash guard removed seen from the front and obliquely below, showing the opening/closing doors opened.
[FIG. 5] FIG. 5 is a perspective view of the door drive device from the right side and obliquely above, showing the opening/closing doors closed.
[FIG. 6] FIG. 6 is a perspective view of the door drive device from the right side and obliquely above, showing the opening/closing doors opened.
[FIG. 7] FIG. 7 is an enlarged perspective view showing an enlarged view of a left side fix bracket.
[FIG. 8] FIG. 8 is a schematic view showing a cross section taken along the line VIII-VIII in FIG. 5.
[FIG. 9] FIG. 9 is a plan view of a lower-end guide unit in a guide mechanism viewed from below, and shows a state in which the opening/closing doors are closed.
[FIG. 10] FIG. 10 is a plan view of the lower-end guide unit in the guide mechanism viewed from below, and shows a state in which the opening/closing doors are closed.
[FIG. 11] FIG. 11 is a diagram viewed in the arrow-indicated XI-direction in FIG. 1, showing an attachment configuration that attaches a first right side door wheel to the right side door.
[FIG. 12] FIG. 12 is an enlarged perspective view showing an upper-end guide unit in the guide mechanism.

### [Description of Embodiments]

### <Embodiments>

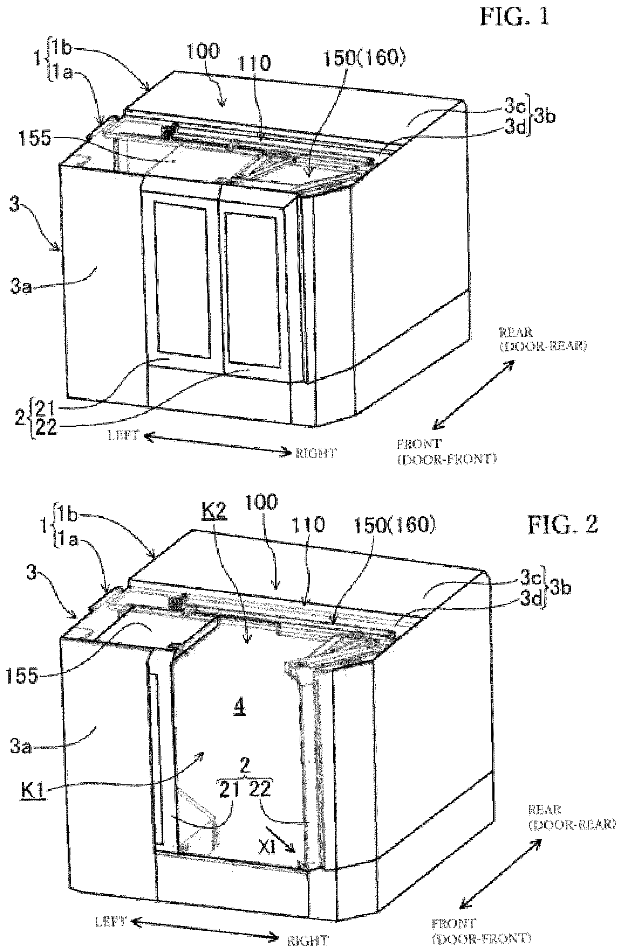

FIG. 1 and FIG. 2 are exterior perspective views showing a machine tool 1 having a door drive device 100 of an embodiment. In the following description, the front side and the rear side refer to the front side and the rear side of the machine tool 1, and the left side and the right side refer to the left side and the right side of the machine tool 1 when viewed from the front side.

The machine tool 1 is a horizontal machining center, the whole of which is covered by a splash guard 3. The machine tool 1 has a setup station 1a that constitutes a front half thereof, a machining chamber 1b located on the rear side of the setup station 1a, and a rotary pallet exchange device (not shown) that exchanges pallets between the setup station 1a and the machining chamber 1b. The splash guard 3 is a member that covers a space 4 in the setup station 1a and a space (not shown) in the machining chamber 1b and forms the overall appearance of the machine tool 1. A front opening K1 is formed in the splash guard 3 through which the space 4 inside the setup station 1a is accessible. The machine tool 1 includes opening/closing doors 2 that open and close the front opening K1, and a door drive device 100 that drives the opening/closing doors 2.

### [Splash Guard]

The splash guard 3 is formed by welding a plurality of sheet metal members. The splash guard 3 has a generally rectangular shape covering the front, rear, left, right, and ceiling sides of the machine tool 1. As shown in FIG. 2, the front opening K1 is formed in a front wall 3a (an example of a side wall) of the splash guard 3. As seen from the front side of the machine tool 1, the front opening K1 has a rectangular shape with an open upper side. The upper end portion of the front opening K1 is continuous with an upper opening K2 formed in a ceiling wall 3b of the splash guard 3. The ceiling wall 3b of the splash guard 3 includes a first ceiling wall portion 3c that covers a rear half portion of the machine tool 1, and a second ceiling wall portion 3d that is connected to a front end portion of the first ceiling wall portion 3c and has a belt drive mechanism 110 installed on its top surface. The upper opening K2 is adjacent to and in front of the second ceiling wall portion 3d. The upper opening K2 has a rectangular shape that is long in the left-right direction in a plan view and is open toward the front.

### [Opening/Closing Doors]

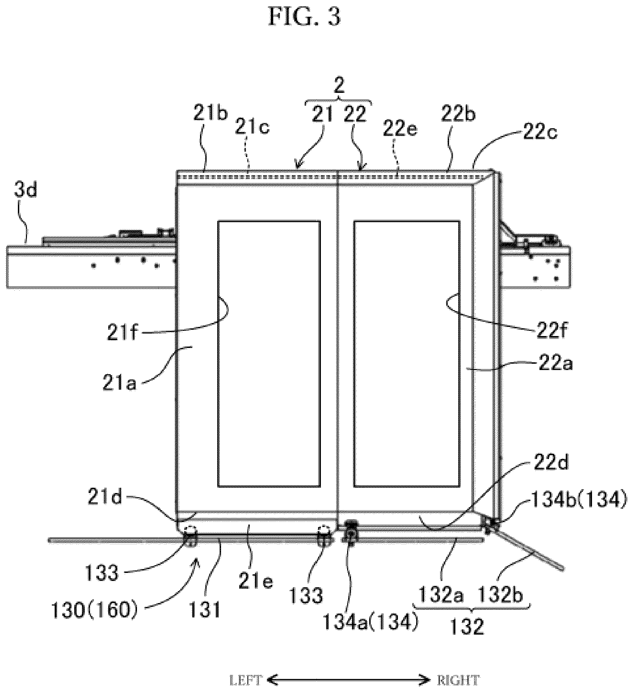

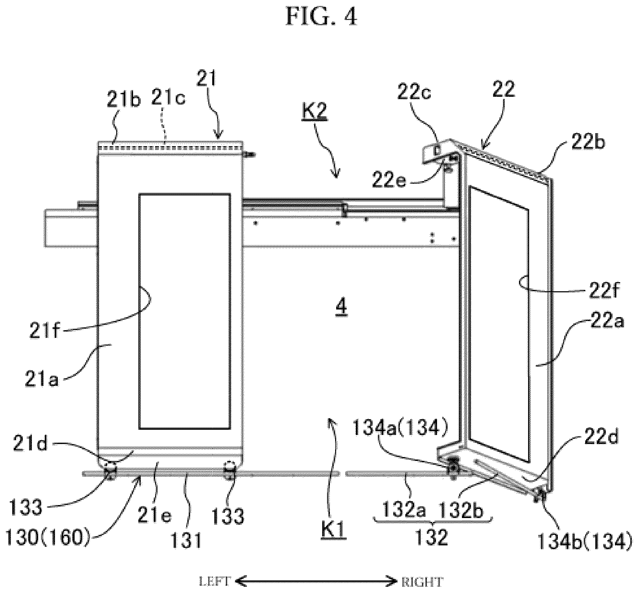

As shown in FIG. 3, the opening/closing doors 2 includes a left side door 21 and a right side door 22 aligned in the left-right direction (an example of predetermined direction) during a closed state. The left side door 21 corresponds to the first door and the right side door 22 corresponds to the second door. The left side door 21 and the right side door 22 are configured to close the front opening K1 by cooperating with each other in the closed state. When the left side door 21 and the right side door 22 are driven in opening directions by the door drive device 100 from the closed state, the left side door 21 moves linearly to the left side and the right side door 22 moves to the right side while rotating counterclockwise in a planar view. As a result, as shown in FIG. 4, the space 4 in the setup station 1a of the machine tool 1 is opened via the front opening K1. In this way, the crane or a worker can access the space 4 in the setup station 1a via the front opening K1.

The left side door21 is formed by welding a plurality of sheet metal members, as shown in FIG. 3 and FIG. 4. Specifically, the left side door 21 includes a rectangular vertical plate 21a that is long in the up-down direction, an inclined plate 21b that extends obliquely upward to the rear side from the upper edge of the vertical plate 21a, a horizontal protruding plate 21c that protrudes horizontally rearward from the rear surface of the inclined plate 21b, a lower-end horizontal plate 21d that protrudes horizontally rearward from the lower edge of the vertical plate 21a, and a lower-end vertical plate 21e that extends vertically downward from the rear edge of the lower-end horizontal plate 21d.

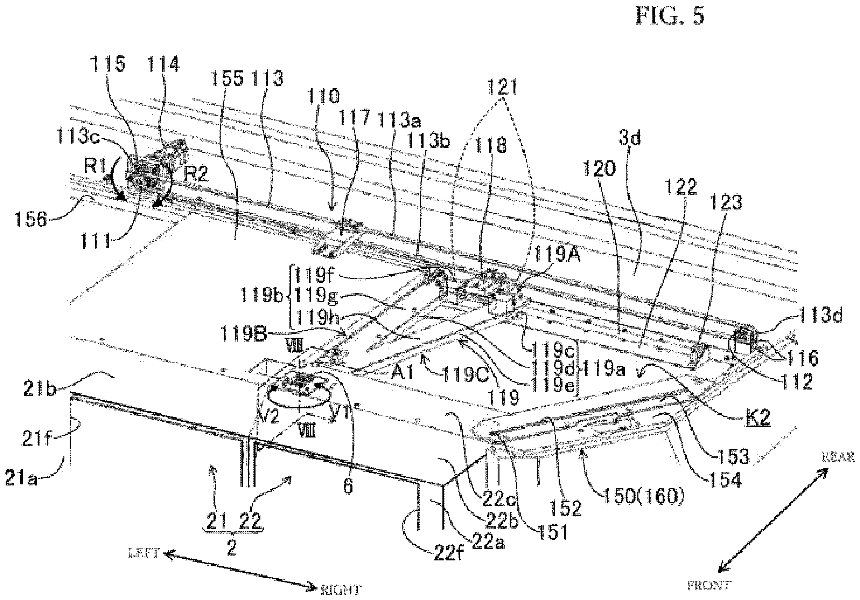

To the upper surface of the horizontal protruding plate 21c of the left side door 21, a front side edge portion of a ceiling slide plate 155 is fixed by welding, as shown in FIG. 5. The ceiling slide plate 155 has a rectangular shape in a plan view and is arranged to span the upper opening K2 in the front-rear direction. The rear side edge portion of the ceiling slide plate 155 is supported on the second ceiling wall portion 3d of the splash guard 3 via a horizontal support plate 156 so as to be slidable in the left-right direction. The horizontal support plate 156 is an elongated sheet metal member extending in the left-right direction and is fixed to the front side edge portion of the second ceiling wall portion 3d. The ceiling slide plate 155 is fixed to an endless belt 113 of the door drive device 100 via a left side fix bracket 117, which will be described later. In this way, the ceiling slide plate 155 functions as a first connecting member that connects the left side door 21 and the endless belt 113.

A window portion 21f covered with a transparent polycarbonate is formed substantially throughout the entire vertical plate 21a of the left side door 21. A pair of left door wheels 133 are attached to the lower end of the lower-end vertical plate 21e. The left door wheels 133 are supported by a rail bar 131 that is a part of a lower-end guide unit 130, which will be described later.

The right side door 22 is formed by welding a plurality of sheet metal members, similar to the left side door 21. Specifically, the right side door 22 includes a rectangular vertical plate 22a that is long in the up-down direction, an inclined plate 22b that extends obliquely upward to the rear side from the upper edge of the vertical plate 22a, an upper-end horizontal plate 22c that protrudes horizontally rearward from the upper edge of the inclined plate 22b, a lower-end horizontal plate 22d that protrudes horizontally rearward from the lower edge of the vertical plate 22a, and a horizontal protruding plate 22e that protrudes horizontally rearward from the rear surface of the inclined plate 22b.

A window portion 22f covered with a transparent polycarbonate is formed substantially throughout the entire vertical plate 22a of the right side door 22. A pair of right door wheels 134 are attached to the lower surface of the lower-end horizontal plate 22d. The right door wheels 134 are supported by a right side rail bar 132 that is a part of the lower-end guide unit 130, which will be described later.

### [Door Drive Device]

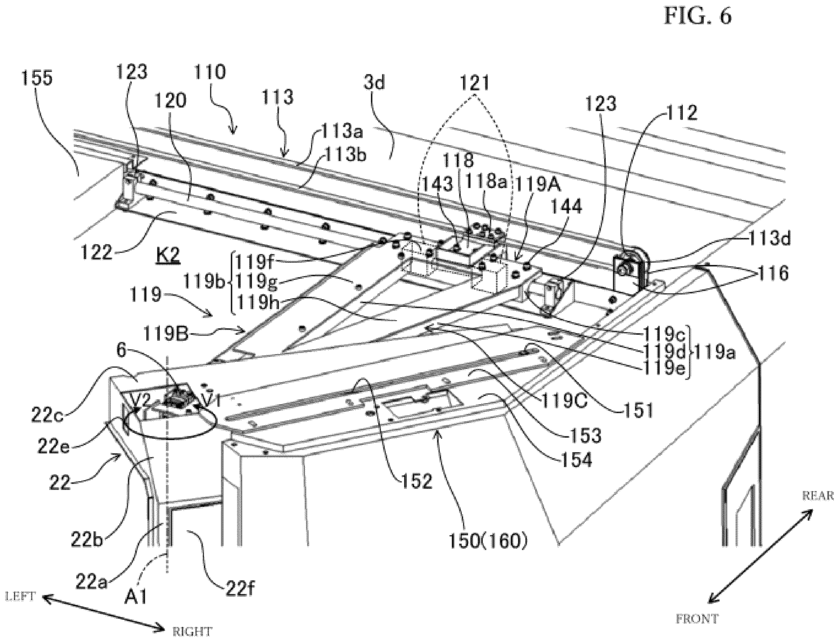

As shown in FIG. 5 and FIG. 6, the door drive device 100 has a belt drive mechanism 110 that drives the left side door 21 and the right side door 22 via the endless belt 113, and a guide mechanism 160 that guides the left side door 21 and the right side door 22 along a predetermined movement path. The guide mechanism 160 has a lower-end guide unit 130 (see FIG. 2 and FIG. 3) that guides the lower ends of the left side door 21 and the right side door 22, and an upper-end guide unit 150 that guides the upper ends of the left side door 21 and the right side door 22.

### [Belt Drive Mechanism]

The belt drive mechanism 110 includes a first pulley 111 and a second pulley 112 arranged spaced apart in the left-right direction, an endless belt 113 looped around the first pulley 111 and the second pulley 112, and a drive motor 114 (an example of a drive source).

The first pulley 111 and the second pulley 112 are arranged with their respective rotation axes directed in the front-rear direction. The first pulley 111 and the second pulley 112 are arranged to be located on the outer sides, in the left-right direction, of the opening/closing doors 2 in the closed state.

The drive motor 114 is fixed to a motor mount plate 115 with its output shaft directed in the front-rear direction. The motor mount plate 115 is made of a square plate member arranged in a standing posture on the upper surface of the second ceiling wall portion 3d of the splash guard 3. The motor mount plate 115 is arranged so that the thickness direction thereof matches the front-rear direction. The drive motor 114 is fixed by bolts from the rear side with respect to the motor mount plate 115. The rotary output shaft of the drive motor 114 penetrates a through hole formed in the center portion of the motor mount plate 115. The drive motor 114 is actuated and controlled by a controller (not shown).

The first pulley 111 is fixed to the rotary output shaft of the drive motor 114 so as to rotate together. On the outer circumferential surface of the first pulley 111, a plurality of teeth are formed and arranged in the circumferential direction over the entire circumference. A plurality of teeth that can mesh with the teeth of the first pulley 111 are formed throughout the entire circumference of the inner circumferential surface of the endless belt 113. By meshing of the teeth on the outer circumferential surface of the first pulley 111 with the teeth on the inner circumferential surface of the endless belt 113, the rotational drive force of the first pulley 111 is transmitted to the endless belt 113. The first pulley 111 functions as a drive pulley that drives the endless belt 113.

The second pulley 112 is rotatably supported by a pair of pulley mount plates 116 fixed to the upper surface of the second ceiling wall portion 3d of the splash guard 3. The pair of pulley mount plates 116 are spaced slightly apart in the front-rear direction to rotatably support both end portions of the rotation axis of the second pulley 112. The second pulley 112 has the same shape and dimensions as the first pulley 111, and a plurality of teeth that can mesh with the teeth formed on the inner circumferential surface of the endless belt 113 are formed throughout the entire outer circumferential surface of the second pulley 112 in the circumferential direction. In this way, the second pulley 112 functions as a driven pulley that rotates according to the rotation of the endless belt 113.

The endless belt 113 includes a pair of flat belt portions 113a and 113b that oppose each other in the up-down direction, and a pair of curved portions 113c and 113d that contact (mesh with) the outer circumferential surfaces of the first pulley 111 and the second pulley 112 and connect the pair of flat belt portions 113a and 113b.

The pair of flat belt portions 113a and 113b oppose each other in the up-down direction, spaced apart by a distance corresponding to the diameters of the pulleys 111 and 112.

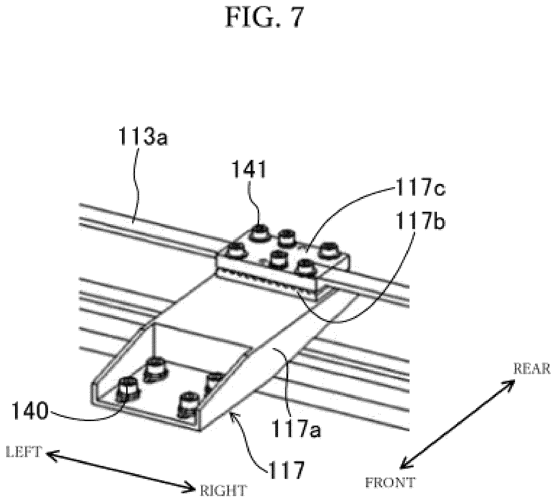

The upper flat belt portion 113a is connected to the left side door 21 via a left side fix bracket 117 and the ceiling slide plate 155 (see FIG. 5). As shown in FIG. 7, the left side fix bracket 117 includes a bracket body 117a having a distal end portion fixed to the ceiling slide plate 155, a belt engagement plate 117b fixed to the upper surface of the proximal end portion of the bracket body 117a, and a belt clamp plate 117c that sandwiches the upper flat belt portion 113a between the belt engagement plate 117b and the belt clamp plate 117c. The bracket body 117a and the ceiling slide plate 155 are fixed by bolts 140. Further, the belt clamp plate 117c is fixed to the belt engagement plate 117b by bolts 141. On the upper surface of the belt engagement plate 117b, a plurality of V-shaped grooves that mesh with the teeth formed on the lower surface of the flat belt portion 113a are arranged side by side in the left-right direction. This suppresses sliding of the flat belt portion 113a in the left-right direction between the belt engagement plate 117b and the belt clamp plate 117c.

As shown in FIG. 6, the lower flat belt portion 113b is connected to the right side door 22 via a right side fix bracket 118 and a connecting frame 119 (corresponding to the second connecting member). The right side fix bracket 118 is fixed to the flat belt portion 113b at the proximal end portion by a belt clamp plate 118a and fixed to the connecting frame 119 at the distal end portion by bolts 143. Note that the configuration of the right side fix bracket 118 is the same as the configuration of the left side fix bracket 117 described above, so detailed descriptions are omitted.

The connecting frame 119 includes a main frame portion 119a and a plate-like subframe portion 119b covering the upper side of the main frame portion 119a. The connecting frame 119 is arranged to span the upper opening K2 between the right side door 22 and the endless belt 113 in the front-rear direction. The connecting frame 119 is supported by a guide bar 120 extending in the left-right direction, via a pair of slide bushes 121.

The guide bar 120 is a cylindrical member that extends in the left-right direction and is arranged adjacent to the front side of the endless belt 113. Both end portions of the guide bar 120 are supported by a pair of support members 123. The pair of support members 123 are fixed to the horizontal plate portion of the L-shaped bracket 122 fixed to the front end surface of the second ceiling wall portion 3d. The pair of slide bushes 121 each forms a slide hole in a rectangular block body that is long in the left-right direction. Each of the slide bushes 121 is configured to be movable in the left-right direction with a slide hole formed therein being fitted over the guide bar 120.

The main frame portion 119a of the connecting frame 119 has a base beam 119c, an orthogonal beam 119d, and an inclined beam 119e. The base beam 119c is formed of an angle member having an L-shaped cross section and extending in the left-right direction, and is fixed to the upper surfaces of the pair of slide bushes 121 by bolts 144. The orthogonal beam 119d extends from the left end portion (one end portion) of the base beam 119c toward the front, and a cross-section perpendicular to the extending direction is formed in a U-shape that opens up to the upper side. At the upper surface of the distal end portion of the orthogonal beam 119d, a lock mechanism 6 configured to lock the left side door 21 and the right side door 22 is provided. The inclined beam 119e extends from the right end portion (another end portion) of the base beam 119c toward the front and to the left, and is connected to the front end portion of the orthogonal beam 119d. The inclined beam 119e is formed in a U-shape that opens up to the upper side in a cross-section perpendicular to the extending direction.

The subframe portion 119b is fixed to the upper side of the main frame portion 119a by bolts. The subframe portion 119b has a base plate portion 119f, an orthogonal plate portion 119g, and an inclined plate portion 119h that cover the upper sides of the base beam 119c, the orthogonal beam 119d, and the inclined beam 119e that constitute the main frame portion 119a, respectively.

Further, the base beam 119c and the base plate portion 119f constitute a base side part 119A of the connecting frame 119, the orthogonal beam 119d and the orthogonal plate portion 119g constitute an orthogonal side part 119B of the connecting frame 119, and the inclined beam 119e and the inclined plate portion 119h constitute an inclined side part 119C of the connecting frame 119.

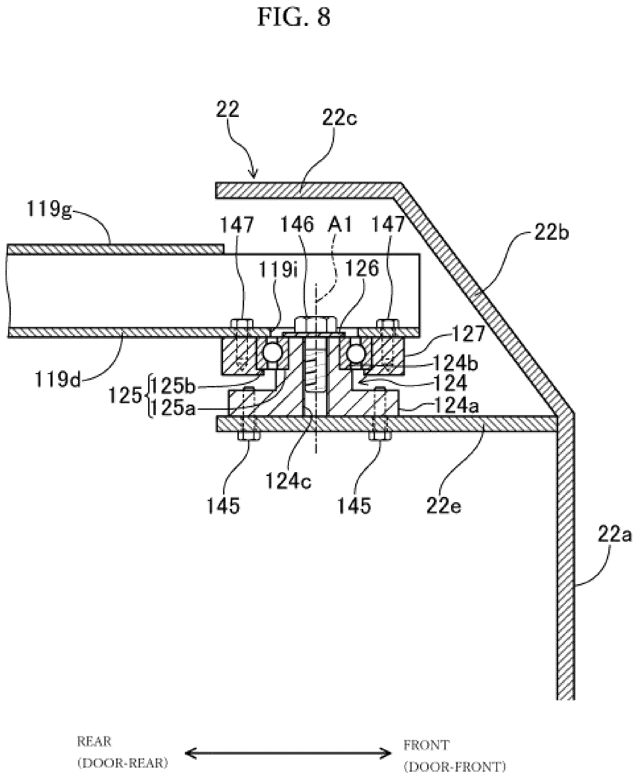

As shown in FIG. 8, the front end portion of the orthogonal beam 119d is connected to the horizontal protruding plate 22e of the right side door 22 via a connecting shaft 124 and a bearing 125. The connecting shaft 124 is a stepped shaft whose axis A1 extends in the up-down direction, and has a flange portion 124a at its lower end. The flange portion 124a is fixed to the upper surface of the horizontal protruding plate 22e by bolts 145. In FIG. 8, although the illustration is omitted, the lock mechanism 6 is provided on a side of the connecting shaft 124.

On the upper end portion of the connecting shaft 124, an inner ring 125a of the bearing 125 is externally fitted. The inner ring 125a of the bearing 125 is fixed so as to be immovable in the up-down direction by a bolt 146, while being sandwiched between a step surface 124b formed on the connecting shaft 124 and a washer 126. The washer 126 and the bolt 146 may be integrally formed.

The bolt 146 is threaded into a screw hole 124c formed in the center of the connecting shaft 124. The bolt 146 and the washer 126 are located inside a relief hole 119i formed at the front end portion of the orthogonal beam 119d, so as not to interfere with the orthogonal beam 119d. An outer ring 125b of the bearing 125 is fixed to the under surface of the orthogonal beam 119d via a hollow disc-shaped connecting member 127, by bolts 147.

Thus, the front end portion of the orthogonal beam 119d is rotatable around the axis A1 of the connecting shaft 124 through the bearing 125. Then, the right side door 22 functions as a pivotally movable door that performs a pivoting movement about the connecting shaft 124 as a fulcrum, in addition to its movement in the left-right direction, during an opening/closing operation. The axis A1 of the connecting shaft 124 corresponds to a predetermined axis parallel to the boundary side edge portion of the pivotally movable door.

### [Lower-End Guide Unit]

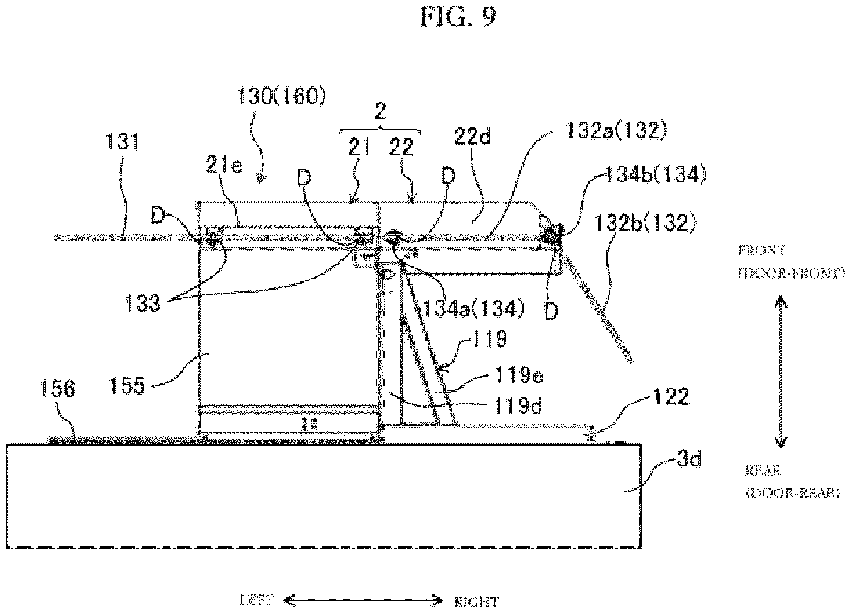

Next, details of the lower-end guide unit 130 in the guide mechanism 160 will be described with reference to FIG. 3, FIG. 4, FIG. 9, and FIG. 10. As shown in FIG. 3 and FIG. 4, the lower-end guide unit 130 has a left side rail bar 131 that defines a movement path of the left side door 21, a right side rail bar 132 that defines a movement path of the right side door 22, a pair of left door wheels 133 attached to the left side door 21 and guided by the left side rail bar 131, and a pair of right door wheels 134 attached to the right side door 22 and guided by the right side rail bar 132. The left and right rail bars 131, 132 are fixed to the inner wall surface of the splash guard 3. Each of the left door wheel 133 and the right door wheel 134 has, in the middle portion in the width direction of the outer circumferential surface of the wheel, a rail engagement groove D (see FIG. 9, described later) that has a V-shaped cross section and extends over the entire circumference in the circumferential direction. The rail engagement groove D of each left door wheel 133 engages the left side rail bar 131 from above, and the rail engagement groove D of each right door wheel 134 engages the right side rail bar 132 from above. As a result, the left door wheel 133 moves along the left side rail bar 131, and the right door wheel 134 moves along the right side rail bar 132.

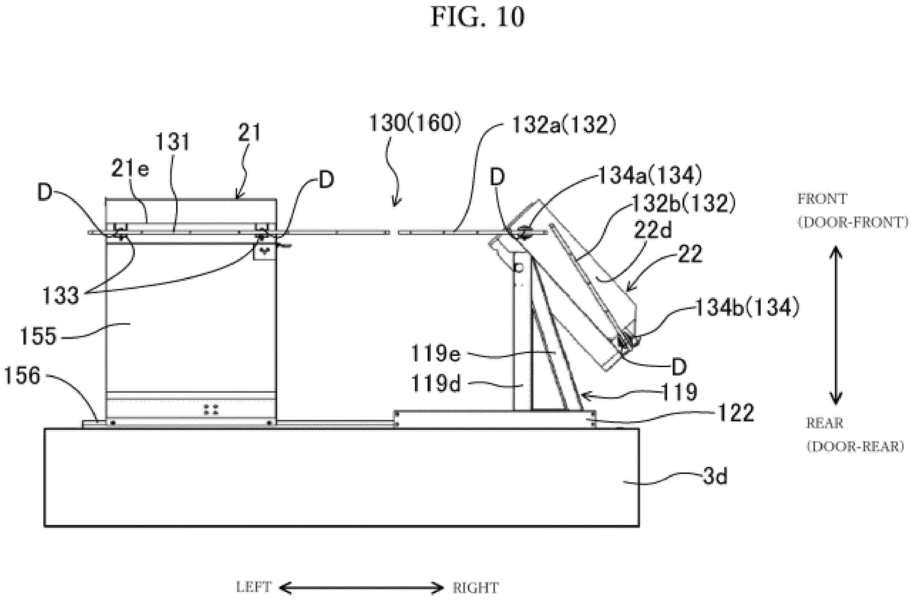

FIG. 9 is a plan view of the lower-end guide unit 130 viewed from below with the opening/closing doors 2 in an open state, and FIG. 10 is a figure corresponding to FIG. 9 showing a state in which the opening/closing doors 2 are closed.

As shown in each figure, the left side rail bar 131 is arranged to extend linearly in the left-right direction. The left door wheels 133 are attached to the rear surface of the lower-end vertical plate 21e of the left side door 21. The left door wheels 133 are guided to move in the left-right direction by the left side rail bar 131.

The right side rail bar 132 includes a parallel rail part 132a and an intersecting rail part 132b. The parallel rail part 132a extends in a direction parallel to the movement direction of the flat belt portions 113a and 113b of the endless belt 113 (in the left-right direction in this example). The intersecting rail part 132b is arranged so as to intersect, in a plan view, with an extension line of the parallel rail part 132a.

The intersecting rail part 132b extends rightward and rearward from a position slightly spaced from the right end portion of the parallel rail part 132a in a plan view. In this example, the intersecting angle between the intersecting rail part 132b and the parallel rail part 132a is set to, for example, 120 to 130 degrees in a plan view.

The pair of right door wheels 134 include a first right door wheel 134a that engages with the parallel rail part 132a and a second right door wheel 134b that engages the intersecting rail part 132b. The first right door wheel 134a and the second right door wheel 134b are attached to the lower surface of the lower-end horizontal plate 22d of the right side door 22 so as to be pivotable about an axis orthogonal to the lower surface of the lower-end horizontal plate 22d.

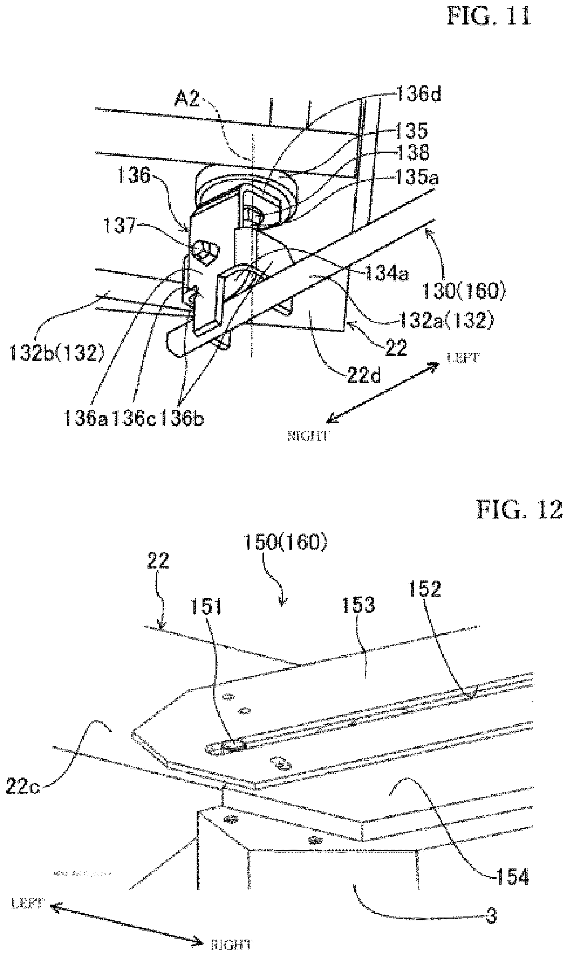

Since the mounting structure of the first right door wheel 134a to the lower-end horizontal plate 22d and that of the second right door wheel 134b to the same are the same, only the mounting structure of the first right door wheel 134a will be described below with reference to FIG. 11, and the description of the mounting structure of the second right door wheel 134b will be omitted.

That is, the first right side door wheel 134a is attached to the lower surface of the lower-end horizontal plate 22d of the right side door 22 via a caster 135 and a support bracket 136. The support bracket 136 supports an axle 137 of the first right door wheel 134a and has a function of protecting the first right door wheel 134a from foreign objects such as cutting chips. The caster 135 has a pivot shaft part 135a coupled to a bearing housed therein, and the support bracket 136 is fixed to the pivot shaft part 135a.

Specifically, the support bracket 136 has a bracket body portion 136a, a pair of side protection plate portions 136b, a rear protection plate portion 136c, and a caster fix plate portion 136d.

The bracket body portion 136a is formed in a rectangular plate shape long in the up-down direction, and horizontally supports the axle 137 of the first right door wheel 134a. The pair of side protection plate portions 136b are connected to both end edges of the bracket body portion 136a in the width direction and face each other with a space therebetween in the width direction. The pair of side protection plate portions 136b are arranged to cover both sides of the first right door wheel 134a in its movement directions.

The rear protection plate portion 136c is a rectangular plate portion that extends downward from the lower end of the bracket body portion 136a. The lower end of the rear protection plate portion 136c is positioned further below the lower end of the first right door wheel 134a. The pair of side protection plate portions 136b and the rear protection plate portion 136c function as a protection member that protects the first right door wheel 134a from foreign objects.

The caster fix plate portion 136d is horizontally connected to the upper edge of the bracket body portion 136a. The caster fix plate portion 136d is fixed to the pivot shaft part 135a of the caster 135 by a nut 138. The pivot shaft part 135a is arranged so that its axis A2 extends in the vertical direction. The support bracket 136 is pivotable around the axis A2 of the pivot shaft part 135a while supporting the first right door wheel 134a.

### [Upper-End Guide Unit]

Next, details of the upper-end guide unit 150 in the guide mechanism 160 will be described with reference to FIG. 5, FIG. 6, and FIG. 12.

The upper-end guide unit 150 has the horizontal support plate 156 (see FIG. 5) that guides linear movement of the upper end portion of the left side door 21 in the left-right direction, and a guide hole 152 that guides pivoting of the upper end portion of the right side door 22. The guide hole 152 engages with a cylindrical protrusion pin 151 protruding from the right end portion, and the engagement between the guide hole 152 and the protrusion pin 151 restricts the movement path of the upper end portion of the right side door 22.

The guide hole 152 is formed in a guide plate 153. The guide plate 153 is fixed to the upper end surface of a corner wall located in the boundary between the front wall and the right side wall of the splash guard 3, via a shim plate 154. The thickness of the shim plate 154 is set such that the protrusion pin 151 engages with the guide hole 152 formed in the guide plate 153.

The guide hole 152 is a slit-like elongated hole that extends toward the rear right from the right end portion of the right side door 22 in the closed position, in a plan view. When the right side door 22 is in the closed position, the protrusion pin 151 is located at the front end portion of the guide hole 152, as shown in FIG. 5. As the right side door 22 moves from the closed position to the open position, the protrusion pin 151 moves obliquely toward the rear right while being engaged with the guide hole 152. As shown in FIG. 6, when the right side door 22 finishes moving to the open position, the protrusion pin 151 moves to the rear end portion of the guide hole 152. By the protrusion pin 151 moving along the guide hole 152, the upper end portion of the right side door 22 is guided along a predetermined opening/closing path.

### [Description of Operation]

A drive operation of the opening/closing doors 2 by the door drive device 100 that is configured as described above will be described. First, referring to FIG. 5, when opening the opening/closing doors 2 in the closed state, the output shaft of the drive motor 114 is rotated in the counterclockwise direction (R1 direction in FIG. 5), as viewed from the front, by the controller (not shown). This causes the first pulley 111 to rotate in the R1 direction, integrally with the output shaft of the drive motor 114, and the endless belt 113 to rotate in the counterclockwise direction, as viewed from the front side. This rotation causes the upper flat belt portion 113a of the endless belt 113 to move leftward, while the lower flat belt portion 113b moves rightward. As a result, the left side door 21 connected to the upper flat belt portion 113a via the ceiling slide plate 155 moves leftward, and the right side door 22 connected to the lower flat belt portion 113b via the connecting frame 119 moves rightward. In this way, the left side door 21 and the right side door 22 move away from each other to reach an open state.

In this opening operation of the opening/closing doors 2, the left side door 21 moves linearly leftward along the left side rail bar 131 (see FIG. 9 and FIG. 10). The left side edge portion (boundary side edge portion) of the right side door 22 moves linearly rightward along the parallel rail part 132a, while the right side edge portion (non-boundary side edge portion) of the right side door 22 moves toward the rear right along the intersecting rail part 132b. As a result, the right side door 22 pivots in the V1 direction about the axis A1 of the connecting shaft 124 (see FIG. 6), while moving rightward, and is ultimately positioned on the inside of the right corner wall of the splash guard 3.

On the other hand, when closing the opening/closing doors 2 in the open state, the output shaft of the drive motor 114 is rotated in the clockwise direction (R2 direction in FIG. 5), as viewed from the front, by the controller.

This causes the first pulley 111 to rotate in the R2 direction, integrally with the output shaft of the drive motor 114, and the endless belt 113 to rotate in the clockwise direction, as viewed from the front side. This rotation causes the upper flat belt portion 113a of the endless belt 113 to move rightward, while the lower flat belt portion 113b moves leftward. As a result, the left side door 21 connected to the upper flat belt portion 113a via the ceiling slide plate 155 moves rightward, and the right side door 22 connected to the lower flat belt portion 113b via the connecting frame 119 moves leftward. In this way, the left side door 21 and the right side door 22 move toward each other to reach the closed state.

In this closing operation of the opening/closing doors 2, the left side door 21 moves linearly leftward along the left side rail bar 131 (see FIG. 9 and FIG. 10). The left side edge portion (boundary side edge portion) of the right side door 22 moves linearly leftward along the parallel rail part 132a, while the right side edge portion (non-boundary side edge portion) of the right side door 22 moves toward the front left along the intersecting rail part 132b. As a result, the right side door 22 pivots in the V2 direction about the axis A1 of the connecting shaft 124 (see FIG. 6), while moving leftward, and ultimately stops at the closed position that obstructs the right half of the front opening K1.

### [Effects of the Present Embodiment]

As hereinabove described, with the door drive device 100 of the present embodiment, the left side door 21 and the right side door 22 perform: a door-closing operation to move toward each other in the left-right direction, when the endless belt 113 is rotationally driven in a predetermined forward direction (R2 direction in FIG. 5) by the drive motor 114, and a door-opening operation to move away from each other in the left-right direction, when the endless belt 113 is rotationally driven in the direction (R1 direction in FIG. 5) opposite to the forward direction by the drive motor 114.

According to this, the left side door 21 and the right side door 22 constituting the opening/closing doors 2 can be driven by a single common drive motor 114. Therefore, the number of components can be reduced and the device cost can be lowered.

Further, in the present embodiment, the endless belt 113 is arranged in a position spaced apart rearward (to a door-rear side) relative to the left side door 21 and the right side door 22 in the closed state. The door drive device 100 has: the ceiling slide plate 155 arranged to span a space between the left side door 21 and the upper flat belt portion 113a of the endless belt 113 and to connect the left side door 21 and the upper flat belt portion 113a; and the connecting frame 119 arranged to span a space between the right side door 22 and the lower flat belt portion 113b of the endless belt 113b and to connect the right side door 22 and the lower flat belt portion 113b.

According to this, the endless belt 113 is arranged in a position spaced apart from the left side door 21 and the right side door 22 to the door-rear side. Therefore, a working entity, such as a crane or a worker, can access the space on door-rear side (the space 4 in the setup station 1a in the present embodiment) without coming into contact with the endless belt 113, while the left side door 21 and the right side door 22 are open.

Further, in the present embodiment, the endless belt 113 is arranged further rearward of the upper opening K2 of the splash guard 3.

Therefore, in the state where the left side door 21 and the right side door 22 are open, a working entity such as a crane or a worker can access the space 4 in the setup station 1a through the front opening K1 and the upper opening K2, without coming into contact with the endless belt 113 or the ceiling wall 3b of the splash guard 3.

Further, in the present embodiment, the right side door 22 is a pivotally movable door such that, in the door-opening operation, the left side edge portion (boundary side edge portion) thereof moves linearly toward the outer side in the left-right direction, while the entire door pivots about an axis A1 parallel to the left side edge portion (boundary side edge portion), thereby causing the right side edge portion (non-boundary side edge portion) to move toward the door-rear side and toward the outer side in the left-right direction; and, in the door-closing operation, performs a reverse movement to that in the door-opening operation. The movement path of the right side door 22 during the opening/closing operation is restricted by the lower-end guide unit 130 and the upper-end guide unit 150.

Thus, the movement path of the right side door 22 is restricted by the lower-end guide unit 130 and the upper-end guide unit 150 so as to perform the above-described pivoting movement operation during the opening/closing operation. Therefore, the installation width of the machine tool 1 in the left-right direction can be reduced compared to a case where the right side door 22 is configured as a linearly movable door.

Further, in the present embodiment, the connecting frame 119 for the right side door 22, which is a pivotally movable door, is connected to the left end portion (the boundary side end portion) of the right side door 22 via the vertically extending connecting shaft 124.

According to this, the right side door 22 pivots about the connecting shaft 124 as a fulcrum during its opening/closing operation. Therefore, the right side door 22 and the endless belt 113 can be connected via the connecting frame 119 without the pivoting movement operation of the right side door 22 being inhibited by the connecting frame 119.

Further, in the present embodiment, the door drive device 100 includes the guide bar 120 that extends in the left-right direction and is arranged adjacent to the endless belt 113, and the slide bush 121 that engages with the guide bar 120 in a slidable manner in the extending direction. The connecting frame 119 is formed as a triangular frame including a base side part 119A extending in the left-right direction, an orthogonal side part 119B extending in the front-rear direction, orthogonally to the base side part 119A, and connected to the left end portion of the base side part 119A, and an inclined side part 119C connecting the distal end portion of the orthogonal side part 119B and the right end portion of the base side part 119A. The base side part 119A is fixed to the slide bush 121, and the distal end portion of the orthogonal side part 119B is connected to the right side door 22 via the connecting shaft 124.

Thus, by forming the connecting frame 119 as a triangular frame, a sufficient space for pivoting the right side door 22 can be ensured between the inclined side part 119C and the right side door 22. Further, since the base side part 119A of the connecting frame 119 is supported by the guide bar 120 via the slide bush 121, rattling of the connecting frame 119 during the movement is suppressed, which enables smooth opening/closing operation of the right side door 22.

Further, in the present embodiment, the lower-end guide unit 130 includes the right door wheels 134 attached to the lower end of the right side door 22, rotatable about a horizontal axle 137 and pivotable about the axis A2 extending in the up-down direction (see FIG. 11), and a rail bar 132 that engages with the right door wheels 134 from below to restrict the movement path of the right door wheels 134.

With this, when the right side door 22 makes a pivoting movement along the rail bar 132, the right door wheels 134 rotate about the axis A2 independently of the right side door 22. Therefore, it is possible to avoid the pivoting movement operation of the right side door 22 from being inhibited by the right door wheels 134.

Further, in the present embodiment, the upper-end guide unit 150 is configured to guide the upper end of the right side door 22, which is a pivotally movable door, through engagement between a protrusion pin 151 protruding from the upper end surface of the right side door 22 and a guide hole 152 formed in a guide plate 153.

Thus, the upper end of the right side door can be guided by a simple configuration of engagement between the guide hole 152 and the protrusion pin 151.

### <<Other Embodiments>>

In the above embodiment, the left side door 21 is a linearly movable door and the right side door 22 is a pivotally movable door. However, the present disclosure is not limited to this, and both the left side door 21 and the right side door 22 may be configured as pivotally movable doors, or only the left side door 21 may be configured as a pivotally movable door. In any case, a link mechanism using, for example, the above-described connecting frame 119 and the connecting shaft 124 can be adopted for the connecting structure between the pivotally movable door and the endless belt 113.

Further, both the left side door 21 and the right side door 22 may be configured as linearly movable doors, without adopting the pivotally movable door described in the above embodiment. That is, the door drive device 100 may be configured to linearly move the left side door 21 and the right side door 22 in the left-right directions, in door opening/closing operation of the doors 21, 22. In this case, for example, a connecting structure using the above-described ceiling slide plate 155 may be adopted as the connecting structure of the doors 21, 22 and the endless belt 113.

In the above embodiment, the endless belt 113 is arranged rearward (door-rear side) relative to the left side door 21 and the right side door 22 in the closed state. However, the present disclosure is not limited to this. That is, for example, the endless belt 113 may be arranged in a position on the door-front side, spaced apart from the left side door 21 and the right side door 22 in the closed state, or may be arranged directly above or directly below each of the doors 21, 22. In the latter case, the endless belt 113 and each door 21, 22 can be directly connected. In this way, connecting members such as the ceiling slide plate 155 and the connecting frame 119 can be eliminated, and the number of components can be reduced as much as possible.

In the above embodiment, the endless belt 113 is arranged such that a pair of flat belt portions 113a and 113b face each other in the up-down direction. However, the present disclosure is not limited to this, and for example, they may be arranged to face each other in the front-rear direction.

In the above embodiment, the endless belt 113 is configured as a toothed belt having a plurality of teeth on the inner circumferential surface. However, the present disclosure is not limited to this, and the endless belt 113 may also be a belt that does not have teeth on the inner circumferential surface. In this case, the teeth do not have to be formed on the outer circumferential surfaces of the first pulley 111 and the second pulley 112.

In the above embodiment, the lower-end guide unit 130 is configured such that the rail engagement grooves D formed on the outer circumferential surfaces of the left door wheels 133 and the right door wheels 134 engage with the rail bars 131 and 132, so as to restrict the movement paths of the wheels 133 and 134. However, the present disclosure is not limited to this. For example, the left door wheels 133 and the right door wheels 134 may engage with a rail groove formed on the machine tool 1 side.

In the above embodiment, the parallel rail part 132a and the intersecting rail part 132b in the lower-end guide unit 130 are configured as separate units, but the present disclosure is not limited to this, and the parallel rail part 132a and the intersecting rail part 132b may be configured as a single unit.

In the present embodiment, the upper-end guide unit 150 is configured to guide the right side door 22 by engaging a protrusion pin 151 fixed to the right side door 22 with a guide hole 152 formed in a guide plate 153. However, the present disclosure is not limited to this, and the positional relationship between the protrusion pin 151 and the guide hole 152 may be reversed. In other words, the protrusion pin 151 may be fixed to the splash guard 3 and the guide hole 152 may be formed in the right side door 22. Further, a guide groove may be adopted instead of the guide hole 152.

In the aforementioned embodiment, the opening/closing doors 2 are composed of a left side door 21 and a right side door 22 lined up in the left-right direction in the closed state. However, the present disclosure is not limited to this, and for example, the opening/closing doors 2 may be composed of an upper door and a lower door lined up in the up-down direction in the closed state.

In the above embodiment, the connecting frame 119 is configured with the main frame portion 119a and the subframe portion 119b, but the present disclosure is not limited to this, and the connecting frame 119 may be formed as a single member. The connecting frame 119 does not necessarily have to be a triangular frame, and may be formed, for example, in a linear frame.

In the above embodiment, the drive motor 114 is configured to rotate the endless belt 113 by rotating the first pulley 111. However, the present disclosure is not limited to this.

For example, the second pulley 112 may be rotationally driven. Further, for example, a third pulley separate from the first pulley 111 and the second pulley 112 may be provided, and the third pulley may be rotationally driven by the drive motor 114.

Furthermore, in the above embodiment, the drive motor 114, which is a rotary actuator, is adopted as the drive source for rotating the endless belt 113. However, the present disclosure is not limited to this. For example, a linear actuator (such as a linear air cylinder) may be adopted. In this case, for example, the flat belt portion 113a (or flat belt portion 113b) of the endless belt 113 can be linearly driven by the linear actuator to rotate the endless belt 113.

In the above embodiments, the opening/closing doors 2, which are the driving targets of the door drive device 100, are provided in the front opening K1 of the setup station 1a in the machine tool 1. However, the present invention is not limited to this. That is, for example, in a machine tool 1 having no setup station 1a, the opening/closing doors 2 may be provided to an opening for accessing a machining chamber 1b. Further, the opening/closing doors 2 may be provided to other industrial machines, such as an inspection apparatus or a workpiece cleaning apparatus, for example, and are not limited to being provided to the machine tool 1. Note that, in the case where the opening/closing doors 2 are provided to the machine tool 1, the machine tool 1 is not limited to a machining center as in the above described embodiment, and may be, for example, a turning center or a multitasking machine tool.

Note that the above description of embodiments is in all respects illustrative and not restrictive. Variations and modifications are possible for those skilled in the art. The scope of the present disclosure is indicated by the claims, not by the embodiments described above. Further, the scope of the present invention includes modifications of the embodiments that fall within the scope of the patent claims and the equivalents.

### [LISTING OF REFERENCE CHARACTERS]

A1: Axis of Connecting Shaft (Predetermined Axis)
A2: Axis of Pivot Shaft Part (Vertical Axis Extending in Up-Down Direction)
K1: Front Opening (Opening)
K2: Upper Opening
1: Machine Tool
2: Opening/Closing Doors
3: Splash Guard
3a: Front Wall (Front Side Wall Part)
3b: Ceiling Wall (Ceiling-Side Wall Part)
4: Space
21: Left Side Door (First Door)
22: Right Side Door (Second Door)
100: Door Drive Device
111: First Pulley
112: Second Pulley
113: Endless Belt
113a: Flat Belt Portion
113b: Flat Belt Portion
113c: Curved Portion
113d: Curved Portion
114: Drive Motor (Drive Source)
119: Connecting Frame (Second Connecting Member)
119A: Base Side Part
119B: Orthogonal Side Part
119C: Inclined Side Part
120: Guide Bar
121: Slide Bush
124: Connecting Shaft
130: Lower-End Guide Unit
131: Left Side Rail Bar (Rail Bar)
132: Right Side Rail Bar (Rail Bar)
134: Right Door Wheels (Wheels)
137: Axle
150: Upper-End Guide Unit
151: Protrusion Pin
152: Guide Hole
155: Ceiling Slide Plate (First Connecting Member)
160: Guide Mechanism

## Claims

1. A door drive device configured to drive opening and closing of opening/closing doors comprising a first door and a second door that are aligned in a predetermined direction and close an opening in a closed state, the door drive device comprising:
a pair of pulleys arranged to be spaced from each other in the predetermined direction;
an endless belt rotatably looped about the pair of pulleys; and
a single drive source configured to rotate the endless belt,
wherein:
the endless belt comprises a pair of flat belt portions that face each other and a pair of curved portions that engage with the pulleys and connect the pair of flat belt portion s,
the first door is connected to one of the flat belt portions of the endless belt,
the second door is connected to the other of the flat belt portions of the endless belt,
the first door and the second door are configured to perform a door-closing operation of moving toward each other in the predetermined direction when the endless belt is rotationally driven in a predetermined forward direction by the drive source, and a door-opening operation of moving away from each other in the predetermined direction when the endless belt is rotationally driven in the direction opposite to the forward direction by the drive source,
the endless belt is arranged in a position spaced apart to a door-rear side of the first door and the second door in the closed state, and
the door drive device further comprises:
a first connecting member that connects the first door and one of the flat belt portions of the endless belt; and
a second connecting member that connects the second door and the other of the flat belt portions of the endless belt.

2. The door drive device of claim 1, wherein:
the opening is formed in a side wall of a machine tool so that its upper end side is open;
the predetermined direction is a horizontal direction along the side wall;
a predetermined functional space facing the opening is provided on the door-rear side of the opening/closing doors;
a ceiling wall of the machine tool has an upper opening that opens the predetermined functional space upward and is continuous with the upper end of the opening;
the endless belt is positioned further to the door-rear side than the upper opening and above the predetermined functional space;
the first connecting member is positioned above the predetermined functional space and is configured to connect the first door and one of the flat belt portions of the endless belt; and
the second connecting member is positioned above the predetermined functional space and is configured to connect the second door and the other of the flat belt portion of the endless belt.

3. The door drive device of claim 2, wherein the predetermined functional space is a machining chamber of the machine tool.

4. The door drive device of claim 2, wherein the predetermined functional space is a space within a setup station adjacent to a machining chamber of the machine tool.

5. The door drive device of claim 1, wherein:
each of the first door and the second door has a boundary side edge portion located on the boundary side in the closed state, and a non-boundary side edge portion located on a side opposite to the boundary side;
at least one of the first door and the second door is a pivotally movable door such that, in the door-opening operation, the boundary side edge portion moves linearly toward the outer side in the predetermined direction while the entire door pivots about a predetermined axis parallel to the boundary side edge portion, causing the non-boundary side edge portion to move toward the door-rear side and toward the outer side in the predetermined direction; and, in the door-closing operation, performs a reverse movement to that in the door-opening operation; and
the door drive device further comprises a guide mechanism configured to restrict a movement path of the pivotally movable door in the door-opening and door-closing operations.

6. The door drive device of claim 1, wherein the connecting member, out of the first connecting member and the second connecting member, which is connected to the pivotally movable door, is connected to an end portion on the boundary side of the pivotally movable door via a connecting shaft that constitutes the predetermined axis.

7. The door drive device of claim 6, wherein:
a guide bar arranged adjacent to the endless belt and extending in the predetermined direction; and
a slide bush that engages with the guide bar in a slidable manner in the extending direction,
wherein the connecting member connected to the pivotally movable door is formed as a triangular frame including a base side part extending in the predetermined direction, an orthogonal side part extending from one end portion of the base side part in a direction orthogonal to the base side part, and an inclined side part connecting the distal end portion of the orthogonal side part and another end portion of the base side part, the base side part is fixed to the slide bush, and the distal end portion of the orthogonal side part is connected to the pivotally movable door via the connecting shaft.

8. The door drive device of any one of claims 1 to 7, wherein:
the predetermined direction is a left-right direction as viewed from a door-front side;
the boundary side edge portion extends in the up-down direction;
the guide mechanism has a lower-end guide unit that guides the lower end portion of the pivotally movable door along a predetermined movement path; and
the lower-end guide unit has a wheel attached to the lower end portion of the pivotally movable door, rotatable about a horizontal axle and pivotable about a vertical axis extending in the up-down direction, and a rail bar that engages with the wheel from below to restrict the movement pathway of the wheel.

9. The door drive device of any one of claims 1 to 7, wherein:
the guide mechanism has an upper-end guide unit that guides the upper end portion of the pivotally movable door along a predetermined movement path; and
the upper-end guide unit is configured to guide the upper end portion of the pivotally movable door by engagement between a guide groove or guide hole and a protrusion pin.

10. The door drive device of any one of claims 1 to 7, wherein:
the first door and the second door are each a linearly movable door that moves linearly in the predetermined direction when performing the door opening operation and the door-closing operation; and
the door drive device further comprises a guide mechanism configured to restrict a movement path of the linearly movable door in the door-opening and door-closing operations.

11. A machine tool comprising the door drive device of claim 1, opening/closing doors driven by the door drive device, and an outside wall having an opening that is opened and closed by the opening/closing doors, wherein:
the opening is formed in a side wall of the machine tool so that its upper end side is open,
the predetermined direction is a horizontal direction along the side wall;
a predetermined functional space facing the opening is provided on a door-rear side of the opening/closing doors;
a ceiling wall of the machine tool has an upper opening that opens the predetermined functional space upward and is continuous with the upper end of the opening;
the endless belt is positioned further to the door-rear side than the upper opening and above the predetermined functional space;
the first connecting member is positioned above the predetermined functional space and is configured to connect the first door and one of the flat belt portions of the endless belt; and
the second connecting member is positioned above the predetermined functional space and is configured to connect the second door and the other of the flat belt portions of the endless belt.

12. The machine tool of claim 11, including a machining chamber in which a workpiece is machined, wherein the predetermined functional space is the machining chamber.

13. The machine tool of claim 11, including:
a machining chamber in which a workpiece is machined; and
a setup station for workpieces, which is provided adjacent to the machining chamber,
wherein the predetermined functional space is a space inside the setup station.
